(19)

Europäisches
Patentamt
European
Patent Office
Office européen
des brevets

(11) **EP 2 078 933 A2**

(12) **EUROPEAN PATENT APPLICATION**

(43) Date of publication:
**15.07.2009 Bulletin 2009/29**

(51) Int Cl.:
*G01D 5/244* (2006.01)    *G01D 5/20* (2006.01)

(21) Application number: **09000230.4**

(22) Date of filing: **09.01.2009**

(84) Designated Contracting States:
**AT BE BG CH CY CZ DE DK EE ES FI FR GB GR
HR HU IE IS IT LI LT LU LV MC MK MT NL NO PL
PT RO SE SI SK TR**
Designated Extension States:
**AL BA RS**

(30) Priority: **09.01.2008 JP 2008001752**

(71) Applicant: **Hitachi, Ltd.**
**Tokyo 100-8280 (JP)**

(72) Inventors:
 • **Kanekawa, Nobuyasu**
  **Tokyo 100-8220 (JP)**
 • **Kobayashi, Ryoichi**
  **Tokyo 100-8220 (JP)**
 • **Koseki, Tomonobu**
  **Tokyo 100-8220 (JP)**

(74) Representative: **Beetz & Partner**
**Patentanwälte**
**Steinsdorfstrasse 10**
**80538 München (DE)**

(54) **Resolver abnormality detection circuit**

(57)    An abnormality detection circuit for a resolver outputs a rotation angle signal 101 corresponding to a rotation angle of a rotor from a resolver winding 102. In the abnormality detection circuit, the resolver abnormality detection circuit applies a specified signal to one terminal of the resolver winding 102, determines whether the specified signal is superimposed on the rotation angle signal 101 outputted by an other terminal of the resolver winding 102, and detects abnormalities of the resolver based on results of the determination.

FIG.1

**Description**

The disclosure of the following priority application is herein incorporated by reference:
Japanese Patent Application No.2008-001752 filed January 9, 2008.

The present invention relates to a device and method for detecting a rotation angle of an electric motor, and particularly relates to a device and method for detecting abnormalities in an indispensable resolver so as to ensure both reliability and safety.

A servo control system requires a rotation angle sensor in order to detect rotation angle and implement feedback control. The necessity for a rotation angle sensor is not just limited to a servo control system. It is also necessary for a current to be made to flow in the coil of a motor according to the rotation angle of the motor in brushless motor control. In the past, resolvers have been widely used as rotation angle sensors due to being sturdy and being environmentally durable as a result of their simple structure.

It is hoped that it will be possible to achieve a high degree of safety and implement failure detection functions when systems using such rotation angle sensors are applied to electric power steering, electric breaking, electronically controlled throttles, and to x-by-wire etc. that control the behavior of a vehicle body by exerting total control on a steering system and brake system.
In Japanese Patent Application Laid-open No. 2006-23164, technology in detection of abnormalities in resolvers is disclosed.

Based on the drawings in the Japanese Patent Application Laid-open No. 2006-23164, it is possible for abnormalities to be detected regardless of the rotation angle of the resolver. This is particularly because a center voltage (bias voltage) of a resolver signal manifesting when a resolver signal line is disconnected is different to a center voltage manifesting during normal operation. According to the technology of the prior art, it is also possible for abnormalities to be detected independent of the rotation angle of the resolver at the time of a short to a power source.

It is also similarly preferable to take into consideration detection when the earthing is faulty. According to the technology of the related art, Rp(pull up resistance)» (direct current resistance of the resolver winding). There is therefore no substantial difference between the center voltage occurring at the time of earthing faults, i.e. (direct current resistance of the resolver winding) =0 and a center voltage during normal operation. This makes the detection of earthing faults difficult.

The first object of the present invention is to provide a method for detecting abnormalities including faulty in shorting to ground of resolver.

It is also preferable to take into consideration measurement for eliminating noise superimposed on a detection signal. In the prior art, CMRR (common-mode reduction ratio) deteriorates when an unbalance impedance to earth occurs due to one of terminals of revolver connecting to ground.
Therefore an inexpensive twisted-pair wire can not be used if devices are installed at noisy site and high accuracy measurement is required and an expensive sealed cable needs to use. Differential input can not detect change of bias voltage superimposed on a revolver signal due to principle for differential input circuit.

The second object of the present invention is to provide an apparatus for detecting abnormalities of resolver in which a noise superimposed on a resolver signal can be easily eliminated.

In order to attain the first object, the present invention provides a first means in which a judgment is made that a resolver is in normal operation if a marker signal (for example a specified bias voltage), which is applied at one terminal of the resolver, is observed at another terminal of the resolver.

According to the first means, disconnection of the resolver winding can be detected when a marker signal, which is applied at the one terminal of the resolver, does not appear at the other terminal of the resolver. In case a specified bias voltage is used as a marker signal, it is preferable that a pull-up resistance or pull-down resistance having an impedance (resistance) larger than that of the bias power source is used to fix a potential. Shorting to power rail can be detected when a power source voltage appears at the other terminal of the resolver. Shorting to ground can be detected when a ground potential appears at the other terminal of the resolver.

In order to attain the second object, the present invention provides a second means in which a marker signal as a common mode component is superimposed on a resolver signal as a normal mode component, a frequency component of a marker signal is received by a c input of an interface and a frequency component of a resolver signal is received by a differential input of the interface. In case a specified bias voltage is used as a marker signal, the interface can be configured such that a lower frequency component, in particular a direct component is received by the single-ended input and a higher frequency component is received by the differential input.

According to the second means, only differential component among a frequency component of the resolver signal is amplified and the in-phase component thereof is cancelled, so that susceptibility to noise is reduced.

According to the present invention, an apparatus for detecting abnormalities of the resolver can be provided and a motor control device with a high reliability and high accuracy can be provided.

## BRIEF DESCRIPTION OF THE DRAWINGS

FIG. 1 shows a fundamental embodiment of the present invention;
FIG. 2 shows a signal waveform of the embodiment of FIG. 1;
FIG. 3 shows a signal waveform of an embodiment where the signal for the marker signal source is superimposed on the resolver signal using time-division.
FIG. 4 shows an embodiment using a direct current voltage signal as a marker;
FIG. 5 shows a signal waveform of the embodiment of FIG. 4 where the direct current voltage signal as the marker is superimposed on the resolver signal;
FIG. 6 shows the explanatory diagram regarding the range of amplitude of the resolver signal at the time of normal operation and abnormal operations in the embodiment of FIG. 4;
FIG. 7 shows a detailed example of the embodiment shown in FIG. 4;
FIG. 8 shows an embodiment using a frequency dividing input unit;
FIG. 9 shows an explanatory diagram regarding frequency characteristics of the embodiment shown in FIG. 8;
FIG. 10 shows an example of gain characteristics of the embodiment shown in FIG. 8;
FIG. 11 shows another explanatory diagram regarding frequency characteristics of the embodiment shown FIG. 8;
FIG. 12 shows another example of gain characteristics of the embodiment shown in FIG. 8;
FIG. 13 shows a variation of the embodiment shown in Fig. 8 using a direct current voltage signal as a marker substitute for the alternating current voltage signal shown in Fig. 8 ;
FIG. 14 shows an explanatory diagram regarding frequency characteristics of the embodiment shown in FIG. 13;
FIG. 15 shows another example of gain characteristics of the embodiment shown infix. 13;
FIG. 16 shows a detailed example of the embodiment shown in FIG. 13;
FIG. 17 shows another detailed example of the embodiment shown in FIG. 13;
FIG. 18 shows another detailed example of the embodiment shown in FIG. 13;
FIG. 19 shows an embodiment of a motor control system with an input interface according to the present invention;
FIG. 20 shows another embodiment of a motor control system with an input interface according to the present invention;
FIG. 21 shows another embodiment of a motor control system with an input interface according to the present invention;
FIG. 22 shows an embodiment of electric power steering with an input interface according to the present invention;
FIG. 23 shows a variation of the embodiment in Fig. 7 using a bias circuit; and
FIG. 24 shows a variation of the embodiment in Fig. 13 using a bias circuit.

## DESCRIPTION OF PREFERRED EMBODIMENTS

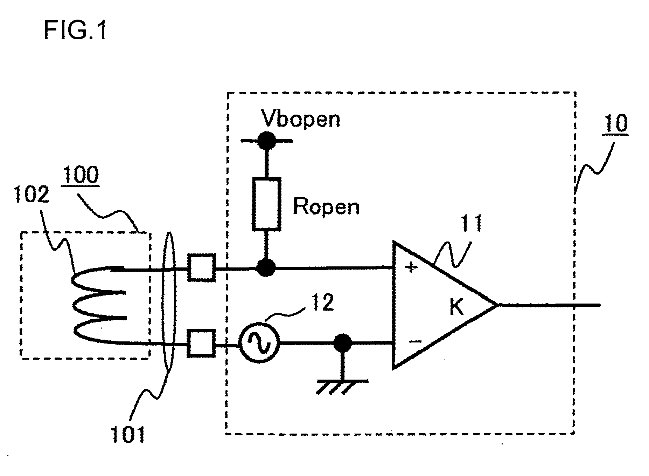

An explanation is given of exemplary embodiments of the present invention using FIG. 1.

A resolver signal winding 102 outputs a resolver signal 101, i. e. a rotation angle signal corresponding to the rotation angle of a rotor from terminals of the resolver signal winding 102. A resolver signal input circuit 11 acquires a rotation angle signal outputted by the resolver signal winding 102 according to the rotation angle of the rotor. A marker signal source 12 applies a specified signal to one terminal of the resolver winding. The resolver signal input circuit 11 that acquires the rotation angle signal and the specified signal of the marker signal source 12 outputs a signal that is obtained by superimposing the specified signal of the marker signal source 12 on the rotation angle signal to an arithmetic unit such as a microcomputer. The arithmetic unit such as a microcomputer includes a determination circuit that determines whether the specified signal is superimposed on the rotation angle signal based on an output signal from the resolver signal input circuit 11 and an abnormality detection circuit that detects abnormalities of the resolver winding based on the results of the determination from the determination circuit.

An explanation is now given of the embodiments of the present invention in accordance with the drawings below. FIG. 1 represents a fundamental embodiment of the present invention. The resolver signal winding 102 of a resolver 100 is magnetically coupled with an excitation winding (not shown) via an iron core (not shown). When an electrical current that is a signal (excitation signal) of a specified waveform is applied at the excitation winding by application of current or application of a voltage, a signal of a waveform analogous to the excitation signal appears at the resolver signal winding 102. The extent of magnetic coupling between the excitation winding (not shown) and the resolver signal winding 102 changes depending on the rotation angle of a center shaft of the resolver. As a result, a ratio of amplitude of an excitation signal and amplitude of a signal appearing at the resolver signal winding 102 changes depending on the rotation angle of the center shaft of the resolver. It is therefore possible to know the rotation angle of the center shaft of the resolver from the amplitude of the signal appearing at the resolver signal winding 102. This is the theory for calculating rotation angle using a resolver.

The resolver signal 101 outputted from the resolver signal winding 102 is inputted to plus and minus input terminals of the resolver signal input circuit 11 (an amplifier circuit is used in this embodiment). The marker signal source 12 is connected in series with wiring connecting the minus input terminal of the amplifier circuit 11 and the resolver signal winding 102, and wiring connecting the minus input terminal of the amplifier circuit 11 and the marker signal source 12 is connected to ground in order to fix the potential. The marker signal source 12 is a voltage source with a theoretical impedance of zero with respect to the resolver signal 101 but which in reality has to be negligible. Wiring that connects the plus input terminal of the amplifier circuit 11 and the resolver signal winding 102 is connected to a specified potential Vbopen via a resistor Ropen.

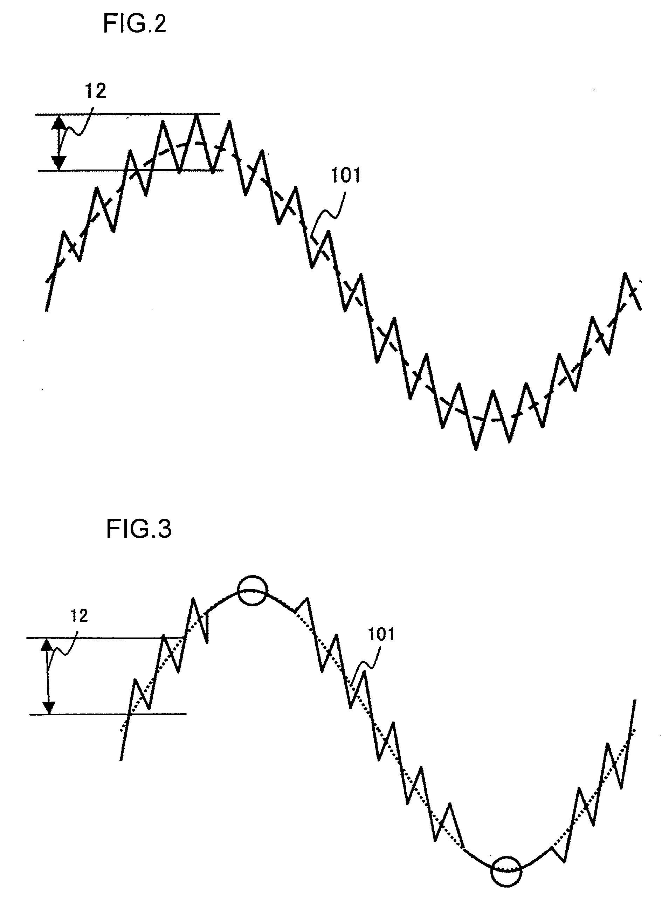

A signal that is obtained by amplifying the signal superimposing the output signal of the marker signal source 12 on the resolver signal 101 appears at the output terminal of the amplifier circuit 11 during normal operation as denoted in FIG. 2. In FIG. 2, the resolver signal 101 is denoted by a dotted line, and the marker signal source 12 is denoted by a solid line.

A signal that is Vbopen amplified K-times is then obtained when wiring transmitting the resolver signal 101 is disconnected, and a signal that is the upper limit voltage of the output range is obtained when the signal that is Vbopen amplified K-times exceeds the output range of the amplifier circuit 11.

A signal of 0V is obtained when the wiring transmitting the resolver signal 101 is shorted to earth. A signal that is VBAT amplified K-times is obtained when wiring transmitting the resolver signal 101 is shorted out to a battery voltage VBAT, i.e. shorted out to the power rail, and a signal that is the upper limit voltage of the output range is obtained when the signal that is VBAT amplified K-times exceeds the output range of the amplifier circuit 11.

It is possible to use a filter that allows only the frequency of the resolver signal 101 or conversely, only the frequency of the signal of the marker signal source 12 to pass in order to separate the resolver signal 101 and the signal of the marker signal source 12. Separation is also possible by obtaining correlation of the resolver signal 101 or the signal for the marker signal source 12 with a reference signal of the same frequency or by implementing synchronous detection.

The output signal of the amplifier circuit 11 can also be inputted to an arithmetic unit such as a microcomputer, although this is not shown in FIG. 1. The microcomputer includes a determination circuit that determines whether the specified signal is superimposed on the rotation angle signal based on the output signal from the amplifier circuit 11, and an abnormality detection circuit that detects abnormalities of the resolver winding based on the results of the determination from the determination circuit.

FIG. 3 shows a signal waveform in an embodiment where the signal for the marker signal source 12 is superimposed on the resolver signal 101 using time-division. In this embodiment, the signal for the marker signal source 12 is not applied when the amplitude of the resolver signal 101 manifests the upper maximum value and the lower maximum value, but is applied at other times. In particular, this embodiment is particularly effective in a method of obtaining the amplitude of the resolver signal 101 by sampling the resolver signal 101 at times indicating the upper and lower maximum values of amplitude so that straightforward separation of the resolver signal 101 and a signal for the marker signal source 12 can be done.

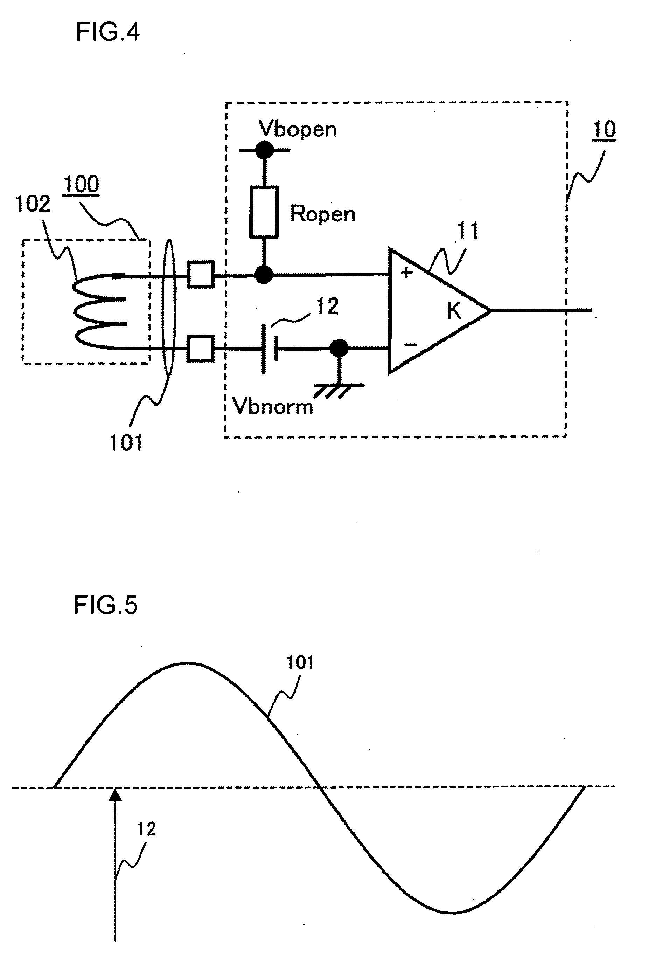

It is also possible to use a direct current voltage source that outputs a specified direct current voltage Vbnormal as the marker signal source 12 as represented in FIG. 4 in order to further simplify implementation of the embodiment represented in FIG. 1. According to the circuit above, a signal that is obtained by amplifying the signal superimposing the specified direct current voltage Vbnormal which is the output signal of the marker signal source 12 on the resolver signal 101specified is obtained at the output terminal of the amplifier circuit 11 during normal operation as denoted in FIG. 5.

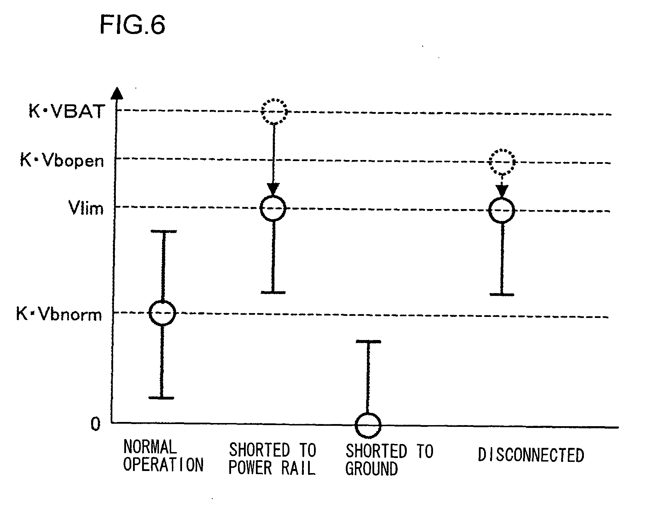

FIG. 6 shows the explanatory diagram regarding the range of amplitude of the resolver signal 101 appearing at the output terminal of the amplifier circuit 11 and the center voltage (bias voltage) both manifesting during normal operation, when shorting to a power rail, when shorting to earth, and at the time of the disconnection. In the drawing, the range of amplitudes of the resolver signal 101 is shown using T-shaped poles, and the center voltages (bias voltage) are shown by white circles.

A signal that is Vbopen amplified K-times is obtained when a wiring for the resolver signal 101 is disconnected, and a signal that is the upper limit voltage of the output range is obtained when the signal that is Vbopen amplified K-times exceeds the output range of the amplifier circuit 11. A signal of 0V is obtained when the resolver signal 101 is shorted to earth. A signal that is VBAT amplified K-times is obtained when the resolver signal 101 shorts out to the battery voltage VBAT, i.e. shorts out to the power rail, and a signal that is the upper limit voltage of the output range is obtained when the signal that is VBAT amplified K-times exceeds the output range of the amplifier circuit 11.

A fault can be detected when the resolver signal shorts out to a power rail because the power supply voltage appears at the other terminal. The fault can also be detected at the time of a short to earth because ground potential (0V) appears on the other terminal.

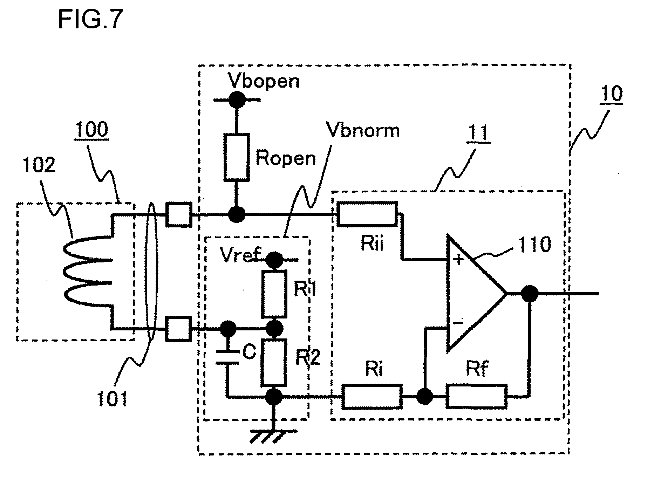

A more detailed example of the embodiment of FIG. 4 is represented in FIG. 7. R1, R2 and C constitute the marker signal source 12 that outputs the specified direct current voltage Vbnormal. R1 and R2 divide Vref to give Vbnormal. This means that Vbnormal= Vref x R2/(R1+R2).

C bypasses the resolver signal 101 and is taken to have negligible impedance with respect to the resolver signal 101. An operational amplifier 110, and Ri and Rf constitute the amplifier circuit 11. Gain K of the amplifier circuit 11 is decided by Ri and Rf, where K=(R1+Rf)/Ri. Theoretically speaking, Rii is not necessary, but in reality is provided to make the offset small.

The output signal of the amplifier circuit 11 can also be inputted to an arithmetic unit such as a microcomputer, although this is not shown in FIG. 7. The microcomputer includes a determination circuit that determines whether the specified signal is superimposed on the rotation angle signal based on the output signal from the amplifier circuit 11, and an abnormality detection circuit that detects abnormalities of the resolver winding based on the results of the determination from the determination circuit.

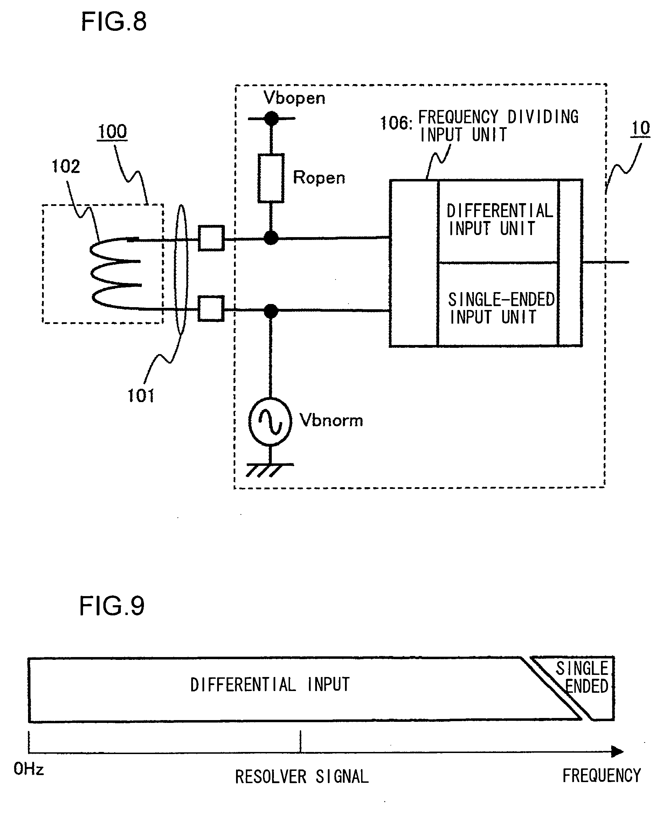

FIG. 8 shows an embodiment that uses a frequency dividing input unit 106 as the input circuit. The frequency dividing input unit 106 is switched over between a differential input and a single ended input depending on the frequency Of the input signal. The marker signal source 12 is connected between wiring for the resolver signal 101 connecting to one input terminal of the frequency dividing input unit 106 and GND potential, as with the embodiment of FIG. 1.

The marker signal source 12 is not connected in series with the wiring of the resolver signal 101. It is therefore not necessary for the impedance of the marker signal source 12 to approach zero ohms as in FIG. 1. The impedance of the marker signal source 12 is therefore not problematic providing this impedance is sufficiently small with respect to Ropen.

A frequency characteristic of the embodiment shown in FIG. 8 will be explained referring to FIG. 9. When the frequency of the marker signal outputted by the marker signal source 12 is higher than the resolver signal 101, the frequency dividing input unit 106 inputs a low frequency component including the resolver signal 101 using differential input, and inputs a high-frequency component including the marker signal using single-ended input.

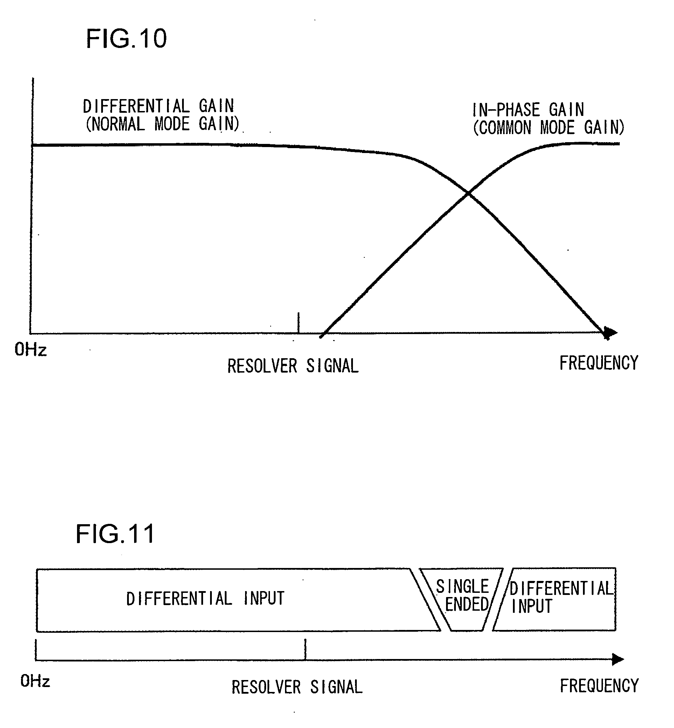

A gain characteristics corresponding to FIG. 9 will be explained referring to FIG. 10 Differential gain (normal mode gain) at the low frequency component containing the resolver signal 101 is high, in-phase gain (common mode gain) is low, differential gain (normal mode gain) at the high-frequency component containing the marker signal is low, and in-phase gain (common mode gain) is high.

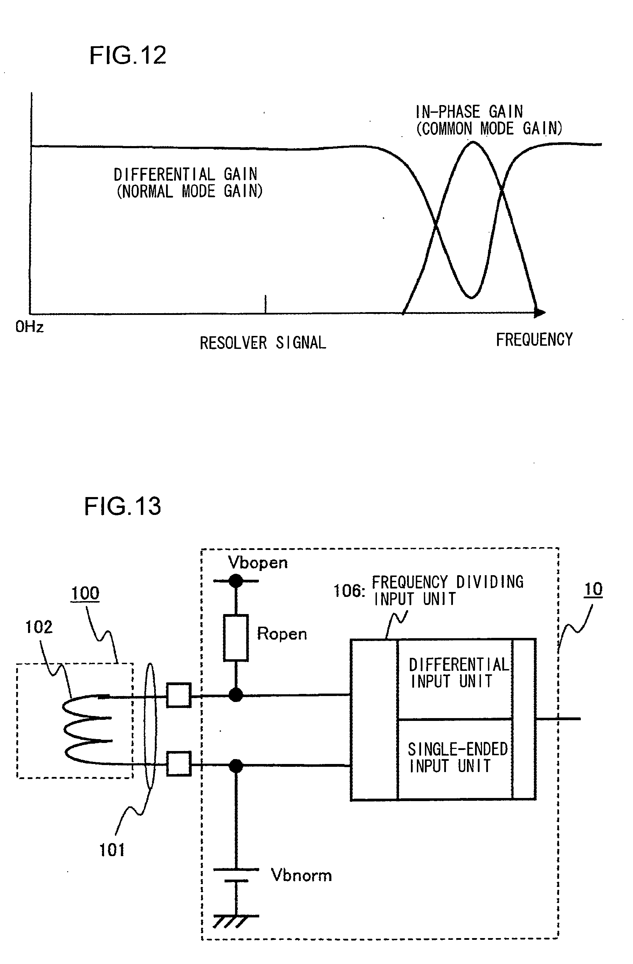

As shown in FIG. 11, the frequency dividing input unit 106 can also input the frequency component containing the marker signal using single-ended input and can input frequency components other than the frequency component containing the resolver signal 101 using differential input. The gain characteristic at this time is shown in FIG. 12. The differential gain (normal mode gain) at the high-frequency component containing the marker signal is low, the in-phase gain (common mode gain) is high, the differential gain (normal mode gain) at frequency components other than the frequency component containing the resolver signal 101 is high, and the in-phase gain (common mode gain) is low.

It is also possible to use a direct current voltage source that outputs the specified direct current voltage Vbnormal as the marker signal source 12 as represented in FIG. 13 in order to further simplify implementation of the embodiment represented in FIG. 8.

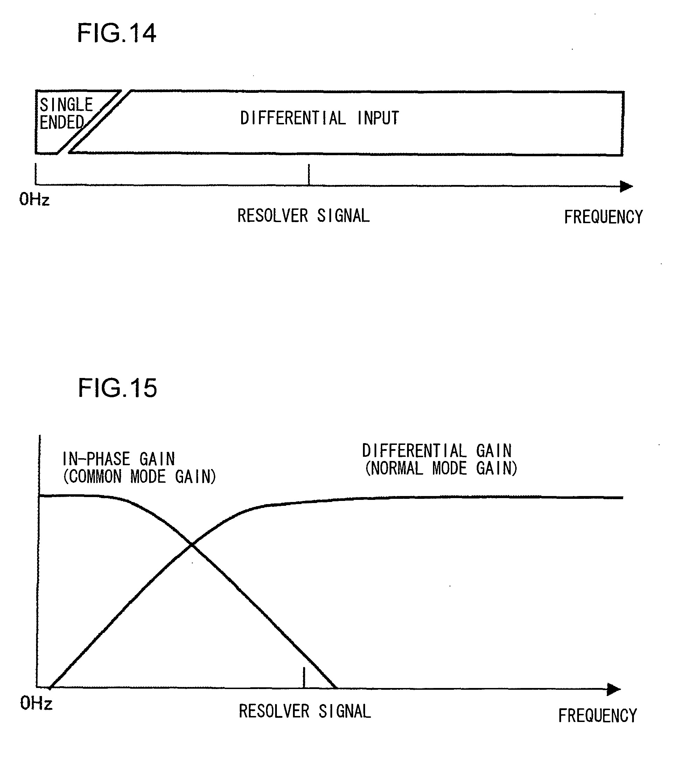

In case that the direct current voltage source is used, the frequency of the marker signal outputted by the marker signal source 12 is lower than the frequency of the resolver signal 101. Therefore, as shown in FIG. 14, the frequency dividing input unit 106 inputs differentially at the high-frequency component including the resolver signal 101 and inputs single-endedly at the low frequency component including the marker signal.

The gain characteristic at this time is shown in FIG. 15. Differential gain (normal mode gain) at the high-frequency component containing the resolver signal 101 is high, in-phase gain (common mode gain) is low, differential gain (normal mode gain) at the low frequency component containing the marker signal is low, and in-phase gain (common mode gain) is high.

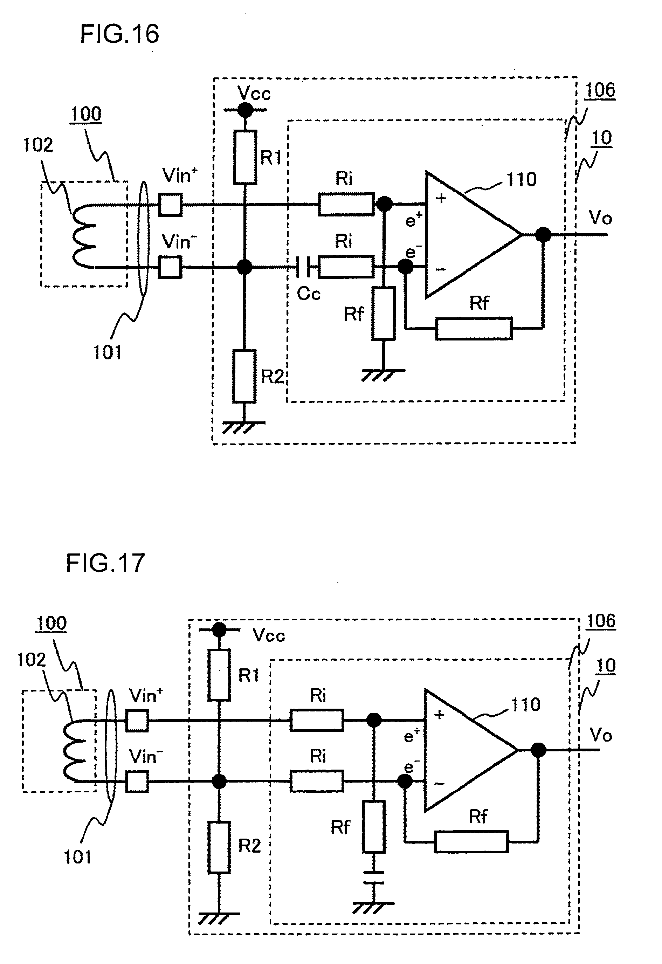

FIGS. 16 to 18 show three embodiments of the frequency dividing input unit 106 shown in FIG. 13 respectively. Each frequency dividing input unit 106 has a frequency characteristic and a gain characteristic shown in FIGS 14 and 15. A method for implementing the frequency dividing input unit 106 is disclosed in Japanese Patent Application Laid-open No. 2005-315840 with the applicants. Operation amplifiers having a frequency characteristic and a gain characteristic as shown in FIGS 14 and 15 are known. These operation amplifiers have a function (an auto-zero function, auto-null function and etc.) to correct an offset and additionally function to achieve the above noted characteristics.

FIG. 16 shows an embodiment where a capacitor Cc is inserted in series with the input signal going to a minus input terminal of the operational amplifier 110. If the capacitor Cc of FIG. 16 is virtually shorted and then an equivalence circuit in the alternating current region is made. The relationship between the input and output of this equivalence circuit is given by the following equation.

$$Vo=Rf(Vin^+-Vin^-)/Ri+Vbnormal$$

If the capacitor Cc of FIG. 16 is virtually opend and then an equivalence circuit in the direct current region is made. The relationship between the input and output of this equivalence circuit is given by the following equation.
$$Vo=(RfVin^++RiVbnormal)/(Ri+Rf)$$

Vbnormal is the output voltage of the direct current voltage source that is the marker signal source 12 and is decided by R1 and R2 using the following equation.
$$Vbnormal=R1/(R1+R2)×Vcc$$

An impedance Rb of the direct current voltage source that is the marker signal source 12 is given by the following equation.
$$Rb=R1//R2=R1×R2/(R1+R2)$$

FIG. 17 shows an embodiment taking the gain of the direct current region as 1. If the capacitor Cc of FIG. 17 is virtually opened and then an equivalence circuit in the alternating current regions made. The relationship between the input and output of this equivalence circuit is the same as for FIG. 16.
The other hand, at the direct current region, an input Vinp is applied as is to the plus input terminal of the operational amplifier without being divided, because of the presence of the capacitor Cc. Vo is then controlled so that the minus input terminal of the operational amplifier becomes Vin+.
$$Vin+=(Rf×Vin^-+Ri×Vo)/(Ri+Rf)$$

In the direct current region, Vo=Vin$^+$ because Vin$^+$=Vin$^-$.
It can be understood from the above explanation that a differential input operation takes place in the alternating current region and a single-ended input operation of a gain of 1 takes place in the direct current region. According to this embodiment, it is possible to make the gain in the direct current region 1. Therefore, a center value of a signal at an A/D converter connected at a latter stage of the frequency dividing input unit 106 can be set at optimumpoints for handling the maximum amplitude , i . e. half of operating voltage of the circuit.

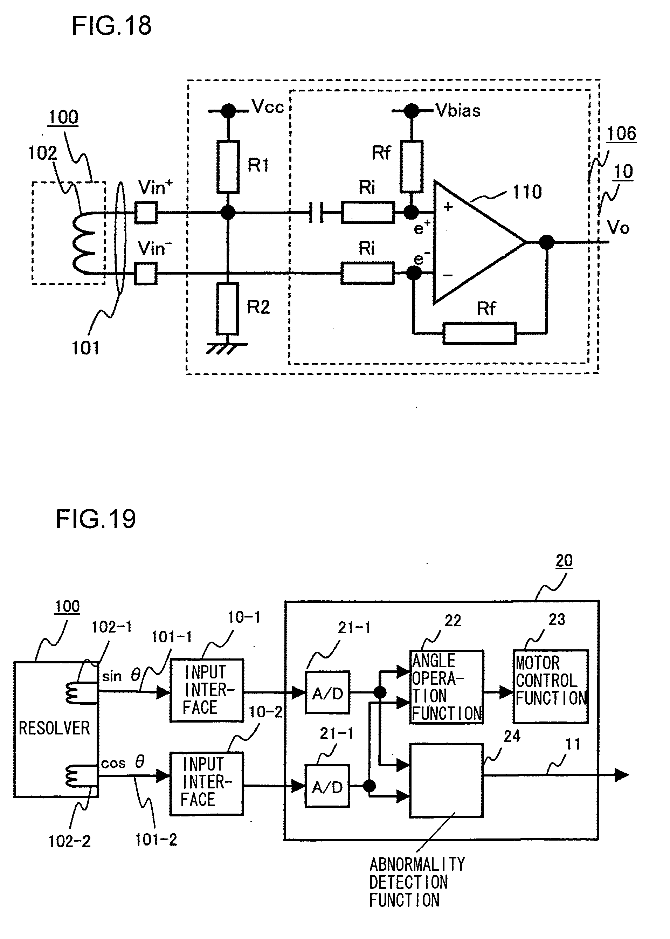

FIG. 18 is an embodiment where a capacitor Cc is similarly inserted in series with the input signal going to a plus input terminal of the operational amplifier 110. This constitutes an equivalence circuit in the alternating current region if the capacitor Cc of FIG. 18 is virtually shorted. The relationship between the input and output of this equivalence circuit is the same as for FIG. 16.
This is an equivalence circuit in the direct current region if the capacitor Cc of FIG. 18 is taken to be virtually open. The relationship between the input and output of this equivalence circuit is given by the following equation.
$$Vo=Rf(Vbnormal-Vin-)/Ri+Vbnormal$$

It can be understood from the above explanation that a differential input operation takes place in the alternating current region and a single-ended input operation takes place in the direct current region. According to this embodiment, it is therefore possible to achieve the frequency characteristics of FIGS. 14 and 15 using this embodiment to implement both an in-phase short-circuit detection function and resistance to noise.

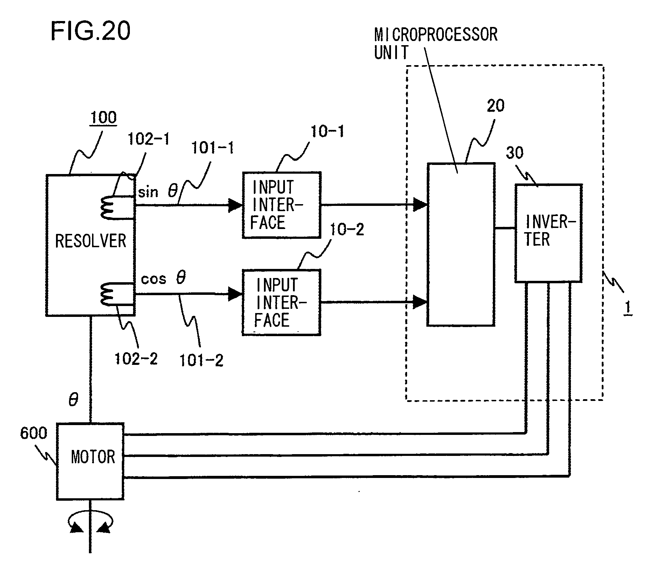

FIGS. 19 and 20 show embodiments of a motor control system using an input interface of the present invention. A resolver signal 101-1 from a resolver signal winding 102-1 of amplitude proportional to sinθ of the resolver 100 and a resolver signal 101-2 from a resolver signal winding 102-2 of an amplitude proportional to cosθ are inputted to A/D converters 21-1 and 21-2 within a microprocessor unit 20 depicted in FIG. 19 via input interfaces 10-1 and 10-2 of the present invention. A rotation angle θ of the resolver 100 is obtained from the amplitude of the resolver signals 101-1 and 101-2 proportional to sinθ and cos θ using a determination unit 22 for rotation angle based on conversion results obtained by the A/D converters 21- and 21-2. The resolver and a motor 600 are connected with the same rotational axis. The rotation angle θ of the resolver 100 is therefore the rotation angle θ of the motor 600.

The amount and phase of the current flowing at the motor 600 is determined by a motor control unit 23 based on the rotation angle of the motor 600. As shown in Fig. 20, an inverter 30 then causes a current of a specified phase and amount to flow at the motor 600 based on an instruction from the microprocessor unit 20. Faults such as shorting of the resolver to the power rail, shorting to earth, or disconnections are detected based on changes in the center voltage at an abnormality detection unit 24 as shown in FIG. 19.

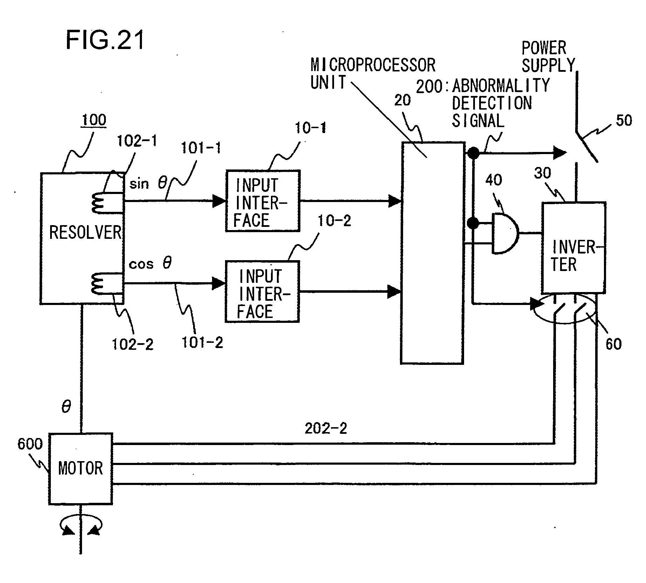

When there is an abnormality, the safety of the operation of the system is ensured by discontinuing the flow of current to the motor 600. This is achieved by controlling a main relay 50 or a phase relay 60 as shown in FIG. 21 using a detected abnormality detection signal 200 or controlling instructions from the microprocessor unit 20 to the inverter 30 using an AND gate 40.

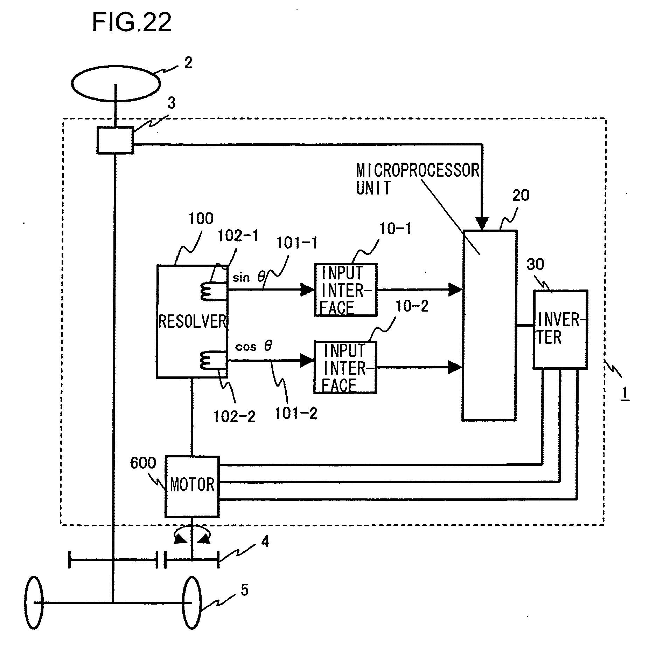

An example of the present invention applied to electric power steering is given in FIG. 22. A reduction mechanism 4 is fitted to a rotating shaft of the motor 600 and drives drive wheels 5 and a steering wheel 2. Steering torque from the driver is detected by a torque sensor 3. The microprocessor unit 20 controls the motor 600 to generate assist torque in accordance with the detected steering torque.

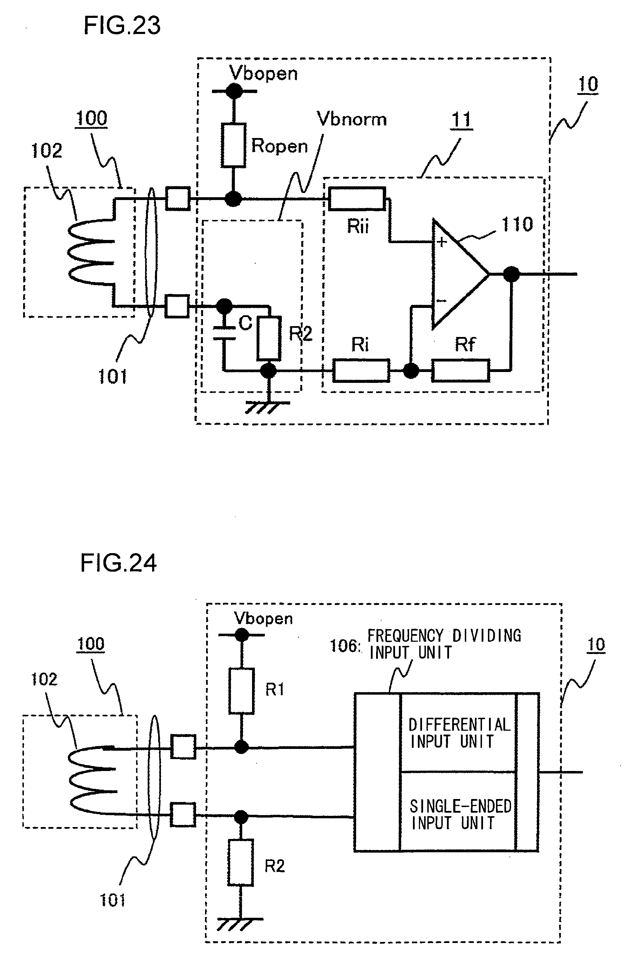

In addition to the explanation of the embodiments of the present invention above, it is also possible to apply the frequency dividing input unit 106 of the present invention to methods of applying a center voltage (bias voltage) disclosed in Japanese Patent Publication Laid-open No. 2000-131096 providing that the configuration as shown in FIG. 23 is adopted.

According to the circuit above, a signal is obtained by amplifying a signal in which the specified direct current voltage Vbnormal that is the output signal of the marker signal source 12 is superimposed on the resolver signal 101specified at the output terminal of the amplifier circuit 11 during normal operation. A signal of 0V is obtained when the resolver signal 101 is shorted to earth. A signal that is VBAT amplified K-times is then obtained when the resolver signal 101 shorts out to the battery voltage VBAT, i.e. shorts out to a power rail, and a signal that is the upper limit voltage of the output range is obtained when the signal that is VBAT amplified K-times exceeds the output range of the amplifier circuit 11. A signal that is Vbopen amplified K-times is obtained when the resolver signal 101 is disconnected, and a signal that is the upper limit voltage of the output range is obtained when signal that is Vbopen amplified K-times exceeds the output range of the amplifier circuit 11.

It is also possible to receive signals using the frequency dividing input unit 106 as depicted in FIG. 24. Features, components and specific details of the structures of the above-described embodiments may be exchanged or combined to form further embodiments optimized for the respective application. As far as those modifications are apparent for an expert skilled in the art they shall be disclosed implicitly by the above description without specifying explicitly every possible combination.

**Claims**

1. An abnormality detection circuit for a resolver (100) that outputs a rotation angle signal (101) corresponding to a rotation angle of a rotor from a resolver winding, wherein the resolver abnormality detection circuit applies a specified signal to one terminal of the resolver winding, determines whether the specified signal is superimposed on the rotation angle signal outputted by an other terminal of the resolver winding, and detects abnormalities of the resolver (100) based on results of the determination.

2. A resolver abnormality detection circuit comprising:

    a resolver signal input circuit (11) that inputs a rotation angle signal outputted by a resolver winding according to a rotation angle of a rotor;
    a signal source that applies a specified signal to one terminal of the resolver winding;
    a determination circuit that determines whether the specified signal is superimposed on the rotation angle signal (101) based on an output signal from the resolver signal input circuit (11); and
an abnormality detection circuit that detects abnormalities of the resolver winding based on the results of the determination from the determination circuit.

3. The resolver abnormality detection circuit according to claim 2, wherein
both ends of the resolver winding are connected to the resolver signal input circuit.

4. The resolver abnormality detection circuit according to claim 1 or 2, wherein
the signal source is connected to the resolver winding and the resolver signal input circuit in series.

5. The resolver abnormality detection circuit according to at least one of claims 2 to 4, wherein
the signal source is a direct current voltage source and the specified signal is a specified direct current voltage.

6. The resolver abnormality detection circuit according to at least one of claims 2 to 5, wherein
a point of connection of the signal source and the resolver signal input circuit is connected to ground potential.

7. A resolver abnormality detection circuit comprising:

a resolver signal input circuit (11) that inputs a rotation angle signal out putted by a resolver winding according to a rotation angle of a rotor;
a first resistor connected across one end of the resolver winding and earth potential;
a second resistor connected across a point of connection of the one end of the resolver winding and the first resistor and a positive voltage source;
a determination circuit that determines whether the specified signal is superimposed on the rotation angle signal based on an output signal from the resolver signal input circuit; and
an abnormality detection circuit that detects abnormalities of the resolver winding based on the results of the determination from the determination circuit.

8. The resolver abnormality detection circuit according to claim 7, wherein
the first resistor is connected in series with the resolver winding and the resolver signal input circuit.

9. The resolver abnormality detection circuit according to claim 7 or 8, wherein
both ends of the resolver winding are connected to the resolver signal input circuit.

10. The resolver abnormality detection circuit according to claim 2 or 7, wherein
the determination circuit receives a signal using a differential input at the frequency region of the rotation angle signal and receives a signal using a single-ended input at the frequency region of the specified signal.

11. A motor control device having the resolver abnormality detection circuit according to claim 2 or 7, wherein motor drive current is stopped when the abnormality detection circuit detects a resolver abnormality.

FIG.1

FIG.2

FIG.3

FIG.4

FIG.5

FIG.6

## FIG.7

FIG.8

FIG.9

# FIG.10

DIFFERENTIAL GAIN
(NORMAL MODE GAIN)

IN-PHASE GAIN
(COMMON MODE GAIN)

0Hz

RESOLVER SIGNAL

FREQUENCY

# FIG.11

DIFFERENTIAL INPUT

SINGLE
ENDED

DIFFERENTIAL
INPUT

0Hz

RESOLVER SIGNAL

FREQUENCY

## FIG.12

IN-PHASE GAIN
(COMMON MODE GAIN)

DIFFERENTIAL GAIN
(NORMAL MODE GAIN)

0Hz

RESOLVER SIGNAL

FREQUENCY

## FIG.13

Vbopen

Ropen

100

102

101

106: FREQUENCY DIVIDING
INPUT UNIT

DIFFERENTIAL
INPUT UNIT

SINGLE-ENDED
INPUT UNIT

10

Vbnorm

## FIG.14

SINGLE
ENDED

DIFFERENTIAL INPUT

0Hz

RESOLVER SIGNAL

FREQUENCY

## FIG.15

IN-PHASE GAIN
(COMMON MODE GAIN)

DIFFERENTIAL GAIN
(NORMAL MODE GAIN)

0Hz

RESOLVER SIGNAL

FREQUENCY

FIG.16

FIG.17

FIG.18

FIG.19

FIG.20

FIG.21

FIG.22

FIG.23

FIG.24

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008001752 A
- JP 2006023164 A
- JP 2005315840 A
- JP 2000131096 A